# EUROPÄISCHE PATENTSCHRIFT

(11) **EP 3 588 788 B1**
(45) Veröffentlichungstag und Bekanntmachung des Hinweises auf die Patenterteilung: **14.04.2021**
(21) Anmeldenummer: 19179931.1
(22) Anmeldetag: 13.06.2019
(51) Int. Cl.: H04B 1/40, H04L 29/06

(54) **MEDIENKONVERTER**
MEDIA CONVERTER
CONVERTISSEUR DE MÉDIA

(30) Priorität: 21.06.2018 BE 201805432
(43) Veröffentlichungstag der Anmeldung: 01.01.2020
(73) Patentinhaber: Phoenix Contact GmbH & Co.KG, 32825 Blomberg (DE)
(72) Erfinder: Stemme, Maik, 31749 Auetal (DE)
(74) Vertreter: Blumbach · Zinngrebe Patentanwälte PartG mbB

(56) Entgegenhaltungen:
- DE-A1-102016 213 076
- US-A1- 2013 266 026
- US-A1- 2014 273 833
- US-A1- 2017 046 299

## Beschreibung

Die Erfindung betrifft einen Medienkonverter zur Übertragung von Daten eines kabelgebundenen Datennetzes, einen Sender und einen Empfänger für einen solchen Medienkonverter sowie ein Verfahren zur Übertragung von Daten eines kabelgebundenen Datennetzes.

Bei industrieüblichen Kommunikationsschnittstellen kommt immer häufiger die Ethernet Kommunikation mit 100Mbit/s oder 1 GBit/s zum Einsatz. Dazu werden z.T. Protokolle verwendet (z.B. EtherCat, Sercos, Profinet IRT, usw.), die eine Echtzeitfähigkeit ermöglichen. D.h. sie arbeiten mit sehr kurzen Latenzzeiten und sind einigermaßen deterministisch.

Wenn solche Protokolle jedoch drahtlos übertragen werden sollen, dann scheitert es heute daran, dass die paketorientierte Übertragung so viel zusätzliche Latenz erzeugt, dass diese Protokolle nicht mehr funktionieren. Denn schaut man sich die entstehenden Verarbeitungszeiten bei der Übertragung von Daten eines kabelgebundenen Datennetzes an, insbesondere auch bei einer zwischengeschalteten kabellosen Übertragungsstrecke, so ist ein Grundproblem bei einer paketorientierten Übertragung das Warten auf ein vollständiges Paket zwischen jeder Übertragungsstrecke. Eine Funkübertragung ist so nur unzulänglich möglich, obgleich in der kabellosen Kommunikation heute viele verschiedene Funktechnologien eingesetzt werden. Die bekanntesten sind Bluetooth und WLAN, aber auch Zigbee, Trusted Wireless, oder auch Mobilfunk und viele andere mehr.

Die US 2017/046299 A1 beschreibt z.B. EHF (extremely high frequency) Kommunikationssysteme welche Standard-USB-Kommunikationssignale über drahtlose EHF-Kommunikationsverbindungen übertragen können und dabei Standard-USB-Protokolle nutzen.

Die US 2013/0266026 A1 beschreibt eine kontaktlose, elektromagnetische (EM) Alternative für verkabelte standardbasierte Schnittstellen wie, zum Beispiel USB.

Diese Funktechnologien bieten die Möglichkeit drahtlos zu kommunizieren und sind jedoch meistens für spezielle Anwendungen ausgelegt. Sie variieren in Bandbreite, bzw. Übertragungsdatenrate, Reichweite, Modulation usw.
Allen gemein ist allerdings, dass sie sich auf eine paketorientierte Kommunikation stützen. Das bedeutet, dass eine gewisse Informationsmenge (z.B. einige Bytes) zunächst einmal von der ursprünglichen Quelle auf Basis einer elektrischen Kupferschnittstelle empfangen werden müssen. Dann wird dieses Paket gegebenenfalls noch um zusätzliche Informationen erweitert (sog. Header) bevor diese Information auf die entsprechende Funkschnittstelle gegeben wird. Dabei werden die Daten moduliert und über eine Antenne abgestrahlt. Auf der Empfängerseite gelangt die Information über die Antenne in die Demodulation. Dann werden die Daten von den hinzugefügten Informationen befreit und das Datenpaket auf einer elektrischen Kupferschnittstelle wieder ausgegeben.

Aus der DE 10 2016 213 076 A1 ist eine weiterentwickelte Technik zur kontaktlosen Datenübertragung unter Echtzeitanforderungen bekannt, insbesondere für die Datenübertragung in Verbindung mit industriellen Ethernet-Protokollen. Zur Verfügung gestellt werden dort ein Sender und ein Empfänger für einen kontaktlosen Übertragungskoppler zur bidirektionalen Übertragung von Daten eines kabelgebundenen Datennetzes sowie ein kontaktloser Übertragungskoppler zur bidirektionalen Übertragung von Daten eines kabelgebundenen Datennetzes mit einem kombinierten Sende- und Empfangsgerät.

Im Einzelnen schlägt die DE 10 2016 213 076 A1 hierbei einen Sender vor, der einen Eingang für den Empfang eines Datensignals besitzt sowie einen Wandler, der dazu eingerichtet ist, das empfangene Datensignal in eine Abfolge von Bits zu verwandeln, wobei die Abfolge von Bits die physikalische Schicht eines auf dem kabelgebundenen Datennetz eingesetzten Netzwerkprotokolls darstellt, bzw. die auf der physikalischen Schicht des auf diesem Datennetz eingesetzten Netzwerkprotokolls übertragenen Nutzdaten darstellt. Ein Modulator moduliert anschließend ein Übertragungssignal mit der von dem Wandler gelieferten Abfolge von Bits und eine Hochfrequenzstufe erzeugt durch Verschiebung des Übertragungssignals in ein Hochfrequenzband ein Hochfrequenzsignal, welches dann über eine Antenne abgestrahlt und auf Seiten eines Empfängers über eine weitere Antenne wieder empfangen wird. Eine Hochfrequenzstufe des Empfängers erzeugt dann wiederum ein Übertragungssignal durch Verschiebung des Hochfrequenzsignals in ein Zwischenfrequenzband, aus welchem anschließend ein Demodulator durch Demodulation wieder eine Abfolge von Bits erzeugt, welche die auf der physikalischen Schicht des auf dem kabelgebundene Datennetz eingesetzten Netzwerkprotokolls übertragenen Nutzdaten darstellt und welche von einem Wandler in ein Datensignal verwandelt und dann wieder auf dem Datennetz ausgegeben werden.

Zwar ermöglicht DE 10 2016 213 076 A1 durch diesen Ansatz grundsätzlich, Daten mit einer extrem kurzen Latenzzeit in der Größenordnung der Bitbreite kontaktlos und effizient übertragen werden, da die auf der physikalischen Schicht des kabelgebundenen Datennetzes übertragene Bitfolge detektiert wird, ein Übertragungssignal mit der detektierten Bitfolge moduliert und als Funksignal übertragen wird und anschließend das Funksignal wieder demoduliert, die Bitfolge rekonstruiert und ein entsprechendes Datensignal für das kabelgebundene Datennetz erzeugt wird.

Ein Nachteil hierbei ist jedoch, dass zur gegenseitigen Synchronisation von Sender und Empfänger zusätzlich zum Wandler sowohl auf Senderseite wie auch auf Empfängerseite eine Logik-Schaltung, insbesondere in Art eines FPGA (Field Programmable Gate Array) vorgesehen sein muss, welche für die Erzeugung eines Taktes bzw. einer Steuerfrequenz verantwortlich ist.

Die US 2014/ 0273833 A1 beschreibt den Pysical Layer (PHY) von Hostsystemen elektrischer Geräte, welcher als drahtloser PHY (contactless PHY, cPHY) für EHF-Kommunikation implementiert sein kann. Der cPHY übersetzt dabei logische Kommunikationsanfragen des Link Layer (LINK) in hardwarespezifische Operationen, um eine Übertragung von Signalen über die drahtlose EHF-Kommunikationsverbindung zu bewirken. Dabei kann auch der Link Layer für eine drahtlose Kommunikation optimiert werden (cLINK).
Eine Aufgabe der Erfindung besteht folglich darin, einen gegenüber dem Stand der Technik nochmals wesentlich verbesserten Weg einer Übertragung von Daten eines kabelgebundenen Datennetzes auf einer kabellosen Zwischenübertragungstrecke aufzuzeigen, mit welchem insbesondere eine zusätzliche Takt- und/oder Steuerfrequenzerzeugung zur gegenseitigen Synchronisation von Sender und Empfänger durch einen separaten Baustein entfallen kann.

Die Lösung gemäß Erfindung ist durch die Gegenstände mit den Merkmalen gemäß der unabhängigen Ansprüche gegeben. Zweckmäßige Ausgestaltungen oder Weiterbildungen sind Gegenstand der abhängigen Ansprüche.

Mit der Erfindung wird folglich vorgeschlagen, einen Sender für einen Medienkonverter zur Übertragung von Daten über unterschiedliche Medien zur Verfügung zu stellen, wobei der Sender einen Eingang, einen Wandler, einen Modulator und eine Antenne besitzt.
Der Eingangs des Senders ist hierbei eingerichtet für den Empfang eines Datensignals über ein erstes, als kabelgebundene Datennetz ausgebildetes Medium entsprechend einem ersten, auf dem ersten kabelgebundenen Datennetz eingesetzten Netzwerkprotokoll. Der Wandler ist dazu eingerichtet, das empfangene Datensignal in eine Abfolge von Bits umzuwandeln, wobei die Abfolge von Bits zu übertragende Daten auf der physikalischen Schicht eines zweiten Protokolls darstellt, welches auf einem zweiten, ausgangsseitig am Wandler anliegenden Medium, nachfolgend auch als originär vorgesehenes Medium bezeichnet, basiert. Der Modulator ist dazu eingerichtet ist, ein Funk-Übertragungssignal in einem vorbestimmten Frequenzband mit der von dem Wandler gelieferten Abfolge von Bits zu modulieren, und die Antenne ist zur Abstrahlung des Funk-Übertragungssignals vorgesehen.
Die Umwandlung durch den Wandler erfolgt hierbei kontinuierlich und unabhängig von Frames oder Paketen, wobei der Wandler ferner dazu eingerichtet ist, eine Synchronisierungsinformation in die Abfolge von Bits einzubetten.

Mit der Erfindung wird ferner vorgeschlagen, einen Empfänger für einen Medienkonverter zur Übertragung von Daten über unterschiedliche Medien mit einem ersten, als kabelgebundenes Datennetz ausgebildeten Medium und einem hierfür eingesetzten Netzwerkprotokoll zur Verfügung zu stellen, wobei der Empfänger eine Antenne, einen Demodulator, einen Wandler und einen Ausgang besitzt, d.h. insbesondere von der Antenne eines gemäß Erfindung vorgeschlagenen Senders.
Die Antenne des Empfängers ist hierbei eingerichtet, zum Empfangen eines Funk-Übertragungssignals in einem vorbestimmten Frequenzband. Der Demodulator ist dazu eingerichtet ist, durch Demodulation des Funk-Übertragungssignals eine Abfolge von Bits zu erzeugen, welche Daten auf der physikalischen Schicht eines zweiten Protokolls darstellt, welches auf einem zweiten, eingangsseitig am Wandler anliegenden Medium basiert, wobei der Wandler dazu eingerichtet ist, die Abfolge von Bits in ein Datensignal entsprechend dem ersten, auf dem kabelgebundenen Datennetz eingesetzten Netzwerkprotokoll umzuwandeln und der Ausgang ist für die Ausgabe des Datensignals auf dem kabelgebundenen Datennetz vorgesehen.

Die Erfindung schlägt ferner zur Übertragung von Daten eines kabelgebundenen Datennetzes über unterschiedliche Medien vor, einen Medienkonverter mit einem vorstehend skizzierten Sender auszubilden und einem Empfänger, der eine Antenne, einen Demodulator, einen Wandler und einen Ausgang besitzt, wobei die Antenne des Empfängers hierbei eingerichtet ist, zum Empfangen des Funk-Übertragungssignals in einem vorbestimmten Frequenzband. Der Demodulator dazu eingerichtet ist, durch Demodulation des Funk-Übertragungssignals eine Abfolge von Bits zu erzeugen, welche Daten auf der physikalischen Schicht des zweiten Protokolls darstellt, welches auf einem zweiten, eingangsseitig am Wandler anliegenden Medium, nachfolgend auch als originär vorgesehenes Medium bezeichnet, basiert, wobei der Wandler dazu eingerichtet ist, die Abfolge von Bits in ein Datensignal entsprechend dem ersten, auf dem kabelgebundenen Datennetz eingesetzten Netzwerkprotokoll umzuwandeln und der Ausgang für die Ausgabe des Datensignals auf dem kabelgebundenen Datennetz vorgesehen ist.

Die Erfindung schlägt schließlich auch ein Verfahren zur Übertragung von Daten eines kabelgebundenen Datennetzes über unterschiedliche Medien mit folgenden Schritten vor. Über ein über ein erstes, als kabelgebundenes Datennetz ausgebildetes Medium wird ein Datensignal entsprechend einem ersten, auf dem kabelgebundenen Datennetz eingesetzten Netzwerkprotokoll empfangen und in eine Abfolge von Bits umgewandelt, wobei die Umwandlung kontinuierlich und unabhängig von Frames oder Paketen erfolgt und Synchronisierungsinformation in die Abfolge von Bits eingebettet wird, und wobei die Abfolge von Bits zu übertragende Daten auf der physikalischen Schicht eines zweiten Protokolls darstellt, welches auf einer nach Umwandlung vorliegenden anderen Energieform basiert, und anschließend ein Funk-Übertragungssignal in einem vorbestimmten Frequenzband mit der Abfolge von Bits moduliert. Dieses Funk-Übertragungssignal wird abgestrahlt und wieder empfangen. Das empfangene Funk-Übertragungssignal wird wieder in eine Abfolge von Bits, welche Daten auf der physikalischen Schicht des zweiten Protokolls darstellt, demoduliert und anschließend wird die Abfolge von Bits in ein Datensignal entsprechend dem ersten, auf dem kabelgebundenen Datennetz eingesetzten Netzwerkprotokoll umgewandelt und über das kabelgebundene Datennetz ausgegebenen.

Im Gegensatz zum Stand der Technik, insbesondere der DE 10 2016 213 076 A1, ist somit ein Aspekt der Erfindung darin zu sehen, dass die Senderseitig aus einem, über ein kabelgebundenes Datennetz empfangenen Datensignal gewandelte Abfolge von Bits bzw. die empfangsseitig in ein auf ein kabelgebundenes Datennetz auszugebenes Datensignal zu wandelnde Abfolge von Bit weder die physikalische Schicht des für das Datensignal auf dem kabelgebundenen Datennetz eingesetzten Netzwerkprotokolls noch die auf der physikalischen Schicht des auf diesem kabelgebundenen Datennetz eingesetzten Netzwerkprotokolls übertragenen Nutzdaten darstellt.

Vielmehr stellt die Abfolge von Bits übertragene Daten auf der physikalischen Schicht eines weiteren Protokolls dar, und zwar desjenigen Protokolls, welches auf dem Medium basiert, welches an der Seite des Wandlers anliegt, an welcher Abfolge von Bits vorliegt. Hierdurch kann eine zusätzliche Takt- und/oder Steuerfrequenzerzeugung zur gegenseitigen Synchronisation von Sender und Empfänger durch einen separaten Baustein entfallen, da Synchronisierungsinformation, insbesondere für die Empfängerseite notwendige Synchronisierungsinformation, bereits unmittelbar in der Abfolge von Bits eingebettet sein kann und nicht erst im Wege der Modulation erzeugt wird.

Vorzugsweise basiert hierbei das kabelgebundene Datennetz auf einem Ethernet-Standard, vorzugsweise auf 100BASE-T oder 1000BASE-T, und/oder das zweite Protokoll entspricht einem Fibre-Channel-Standard, z.B. 100BASE-FX oder 1000BASE-FX. Insbesondere in diesem Fall wird als Wandler ferner zweckmäßig ein Ethernet PHY mit Fiberoptik Schnittstelle eingesetzt.

Bevorzugt ist vorgesehen, für das Funk-Obertragungssignal ein ISM-Band zu verwenden, insbesondere einen EHF-Frequenzbereich (Extremely High Frequency), vorzugsweise einen Frequenzbereich von 57 bis 66GHz, oder darüber. Einerseits ermöglich dies genügend Bandbreite und erlaubt eine kontinuierliche Kommunikation. Auch sind in diesem Frequenzbereich sehr kleine Kommunikationsräume bei gleichzeitig hoher Datenrate möglich, so dass viele verschiedene Systeme oder erfindungsgemäße Medienkonverter in naher Umgebung störungsfrei nebeneinander arbeiten können.

Der Wandler nimmt ferner zweckmäßig bei der Umwandlung von Bits eine Codierung, insbesondere eine 4B5B Codierung, basierend auf der jeweils an der ausgangsseitigen Schnittstelle des Wandlers anliegenden physikalischen Schicht vor, da hierdurch auf einfache Weise eine jeweilige Synchronisierungsinformation in die gewandelten Daten einbettbar ist.

Auch die Umwandlung durch den Wandler des des Empfängers erfolgt ferner in praktischer kontinuierlich und unabhängig von Frames oder Paketen.

Weitere Merkmale und Vorteile ergeben sich aus der nachfolgenden Beschreibung bevorzugter Ausgestaltungen und Weiterbildungen anhand der beigefügten Zeichnung, in weicher zeigen:
- Fig. 1: ein stark vereinfachtes Ablaufschema eines bevorzugt ausgestalteten Verfahrens zur Übertragung von Daten eines kabelgebundenen Datennetzes über unterschiedliche Medien gemäß der Erfindung, und
- Fig. 2: ein stark vereinfachtes Blockdiagram einer Ausführungsform eines Medienkonverters mit einem Sender und einen Empfänger gemäß der Erfindung.

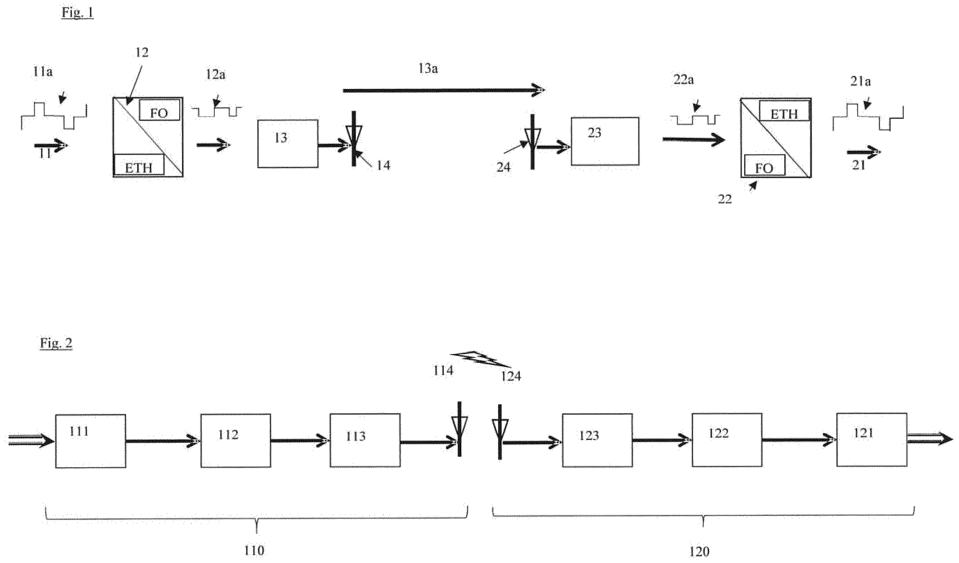

Fig. 1 zeigt mittels eines stark vereinfacht dargestellten Ablaufschemas eine Übertragung von Daten eines kabelgebundenen Datennetzes über unterschiedliche Medien. Das dargestellte Verfahren und die nachfolgend noch ergänzend beschriebenen Vorrichtungen können z.B. im Rahmen von Kommunikationsschnittstellen zur drahtlosen Energie- und Datenkopplung, z.B. in der Automobilindustrie oder anderer Automatisierungsumgebung, zum Ersatz von wartungsintensiven Steckverbindern, z.B. an Roboter- Wechselwerkzeugen Einsatz finden.

Hierbei wird über ein erstes, als kabelgebundenes Datennetz ausgebildetes Medium ein Datensignal 11a entsprechend einem ersten, auf dem kabelgebundenen Datennetz eingesetzten Netzwerkprotokoll empfangen, wie mit dem Bezugszeichen 11 angedeutet, und anschließend das empfangene Datensignal in eine Abfolge von Bits 12a umgewandelt, wie mit dem Bezugszeichen 12 angedeutet. Nach der Umwandlung stellt die Abfolge von Bits 12a zu übertragene Daten auf der physikalischen Schicht eines zweiten Protokolls dar, und zwar eines, welches auf einer nach Umwandlung vorliegenden anderen Energieform basiert. Das erste Datennetz kann in praktischer Umsetzung insbesondere ein drahtgebundenes, insbesondere Kupfer-basiertes Datennetz sein und/oder bei dem Datensignal 11a kann es sich folglich insbesondere um ein Feldbus-Datensignal handeln, z.B. ein dem Standard 100BASE-T oder 1000BASE-T entsprechendes Ethernet-Signal, welches heutzutage häufig in der Industrie und/oder Automatisierungstechnik zur paketgebundenen Kommunikation verwendet wird. Bei der Umwandlung werden die Daten des empfangenen Datensignals zweckmäßig ähnlich zur DE 10 2016 213 076 A1 auf der Bitübertragungsschicht ("physikalische Schicht"; engl. "physical layer" = "PHY") detektiert, um ein mehrwertiges, d.h. zwei- oder höherwertiges Datensignal, z.B. ein über mind. ein Ader-Paar übertragenes Feldbus-Signal, in ein zweiwertiges Signal in Form eines einfachen Bitstroms zu wandeln. Diese Wandlung erfolgt bevorzugt sofort, d.h. wenn das Datensignal einläuft unabhängig von Frames oder Paketen und also kontinuierlich und maximal mit einer lediglich minimalen Verzögerung. Wie vorstehend bereits angeführt, stellt nach der Umwandlung die Abfolge von Bits 12a jedoch zu übertragene Daten auf der physikalischen Schicht eines zweiten Protokolls dar, welches auf der nach Umwandlung vorliegenden anderen Energieform basiert. Wird z.B. ein über drahtgebundenes Datennetz empfangenes Ethernet-Signal auf der Bitübertragungsschicht detektiert, wie beim Umwandlungsschritt 12 in Fig. 1 z.B. durch einen mit ETH gekennzeichneten Funktionsblock angedeutet, und liegt nach Wandlung die Bitfolge 12a in einer Energieform zur Ausgabe an einer Faseroptik-Schnittstelle (auch Fiberoptik genannt) vor, wie beim Umwandlungsschritt 12 in Fig. 1 z.B. durch einen mit FO gekennzeichneten Funktionsblock angedeutet, stellt die Abfolge von Bits 12a die zu übertragenen Daten auf der physikalischen Schicht eines hierfür geeigneten zweiten Protokolls dar, also z.B. einem Fibre-Channel-Standard folgend, z.B. 100BASE-FX oder 1000BASE-FX. Hierdurch kann eine zusätzliche Takt- und/oder Steuerfrequenzerzeugung zur gegenseitigen Synchronisation von Sender und Empfänger durch einen separaten Baustein entfallen, da Synchronisierungsinformation, insbesondere für die Empfängerseite notwendige Synchronisierungsinformation, bereits unmittelbar in der Abfolge von Bits eingebettet werden kann und nicht erst im nachfolgenden separat erzeugt werden muss. Bevorzugt dient hierzu im Rahmen der Erfindung zur Synchronisierung und späteren Taktrückgewinnung im Empfänger auch eine Umwandlung mit einer zusätzlicher 4B5B Kodierung,

Anschließend erfolgt mit der Abfolge von Bits das Modulieren 13 eines Funk-Übertragungssignals 13a in einem vorbestimmten Frequenzband. Hierzu wird zweckmäßig eine binäre, direkte Modulation durchgeführt, wobei das vorbestimmte, zweckmäßig einstellbare Frequenzband ausreichend Bandbreite zur Verfügung stellen muss, um bei dem modulierten, jedoch weiterhin lediglich zwei-wertigen Signal eine kontinuierliche, im Wesentlichen latenzfreie Kommunikation zu ermöglichen. Bewährt hat sich hierbei Funk-Übertragungssignal im EHF-Frequenzbereich (Extremely High Frequency) oder darüber. Zweckmäßig hat sich ergänzend oder alternativ auch die Verwendung eines sogenannten ISM-Bandes (Idustrial, Scientific and Medical Band), vorzugsweise im Frequenzbereich von 57 bis 66GHz, für das Funk-Übertragungssignal gezeigt, da diese in der Regel genehmigungsfrei genutzt werden können. Obgleich die mit der Erfindung zu überbrückenden Funk-Übertragungsstrecken in der Regel nur kurze Distanzen aufweisen, vorzugsweise im Bereich von ca. 10cm, und ein solcher HF-Bereich für derartig kleine Distanzen in der Fachwelt üblicherweise entgegen das Fachwissen spricht und als nicht interessant erachtet wird, sind die vorstehend dargelegten HF-Bereiche im vorliegenden Fall auch für kleine Entfernungen geeignet, insbesondere da sie genügend Bandbreite bereitstellen, um das modulierte Signal mit hoher Datenrate im Wesentlichen latenzfrei übertragen zu können, und auch viele Systeme können störungsfrei nebeneinander betrieben werden, da eine gut kontrollierbare Signalausbreitung möglich ist und in Folge der Kommunikationsraum, d.h. die Funkausbreitung, gut eingeschränkt werden kann.

Zur Modulation können je nach spezifischer Ausbildung verschiedene Modulationstechniken eingesetzt werden, wobei sich die digitale Amplitudenmodulation insofern als besonders zweckmäßig erwiesen hat, da diese auch wieder einfach zu demodulieren ist. Alternativ können jedoch auch andere Modulationstechniken eingesetzt werden, wie z.B. FSK (Frequency Shift Keying) oder PSK (Phase Shift Keying).

Das nach Modulation abgestrahlte 14 und auf Empfängerseite empfangene 24 Funk-Übertragungssignal 13a wird anschließend wieder in eine Abfolge von Bits 22a demoduliert, d.h. es wird insbesondere binär und direkt demoduliert, wobei die Abfolge der Bits 22a wieder Daten auf der physikalischen Schicht des vorstehend angeführten zweiten Protokolls darstellt. Die wiedergewonnene Abfolge von Bits 22a wird anschließend in ein Datensignal 21a entsprechend dem vorstehend angeführten ersten, auf dem kabelgebundenen Datennetz eingesetzten Netzwerkprotokoll umgewandelt und über das kabelgebundene Datennetz ausgegeben 21.

Ein insbesondere auch zur Umsetzung des vorbeschriebenen Verfahrens einsetzbarer Medienkonverter zur Übertragung von Daten über unterschiedliche Medien, d.h. im Wesentlichen eines Übertragungskopplers der bei der Datenübertragung einen Austausch von genutzten Übertragungsmedien ermöglicht bzw. auch bewirkt, besitzt folglich grundsätzlich einen Sender, bei dem in Fig. 2 stark vereinfachten Blockdiagram einer Ausführungsform eines Medienkonverters mit dem Bezugszeichen 110 gekennzeichnet, und einen Empfänger, bei dem in Fig. 2 stark vereinfachten Blockdiagram mit dem Bezugszeichen 120 gekennzeichnet.

Der Sender 110 umfasst folglich ferner einen Eingang 111, ausgebildet für den Empfang eines Datensignals über ein erstes, als kabelgebundene Datennetz ausgebildetes Medium entsprechend einem ersten, auf dem ersten kabelgebundenen Datennetz eingesetzten Netzwerkprotokoll.

Ferner umfasst der Sender 110 einen Wandler 112, der dazu eingerichtet ist, das empfangene Datensignal in eine Abfolge von Bits umzuwandeln. In praktischer Umsetzung übergibt der Eingang 111 das empfangene Datensignal somit einer physischen Schnittstelle (PHY) am Eingang des Wandlers 112. Wenn das kabelgebundene Datennetz auf einem Ethernet-Standard, vorzugsweise auf 100BASE-T oder 1000BASE-T basiert, ist die PHY des Wandlers 112 hierbei als entsprechend geeignete Ethernet PHY ausgebildet.

Unter Berücksichtigung vorstehender, in Bezug auf Fig. 1 erfolgten Beschreibung erfindungsgemäßer Verfahrensausgestaltungen, ist der Wandler ferner eingerichtet, das empfangene Datensignal in eine Abfolge von Bits derart umzuwandeln, dass die umgewandelte Abfolge von Bits übertragene Daten auf der physikalischen Schicht eines zweiten Protokolls darstellt, welches auf einem zweiten, ausgangsseitig am Wandler originär vorgesehenen Medium basiert. Insbesondere, wenn der Wandler 112 ausgangsseitig gemäß vorstehender Beschreibung vorzugsweise eine Fiber-Optik-Schnittstelle besitzt, kann das zweite Protokoll folglich einem Fibre-Channel-Standard, z.B. 100BASE-FX oder 1000BASE-FX, entsprechen.

Der Sender 110 besitzt ferner einen dem Wandler 112 übertragungstechnisch nachgeschalten Modulator 113, der mit der von dem Wandler gelieferten Abfolge von Bits ein Funk-Übertragungssignal in einem vorbestimmten Frequenzband zu moduliert, welches daraufhin an eine Antenne 114 des Senders zur Abstrahlung des Funk-Übertragungssignals übergeben wird.

Ein von der Antenne 114 des Senders abgestrahltes Funk-Übertragungssignals kann dann von einem Empfänger 120 des Medienkonverters wieder empfangen werden.

Der bei ein Fig. 2 skizzierte Empfänger 120 besitzt hierzu folglich zunächst eine Antenne 124 zum Empfang des Funk-Übertragungssignals in einem vorbestimmten Frequenzband, einen Demodulator 123, einen dem Demodulator Übertragungstechnisch nachfolgenden Wandler 122 und einen Ausgang 121,

Unter Berücksichtigung vorstehender, insbesondere auch in Bezug auf Fig. 1 erfolgter Beschreibung, ist der Demodulator 123 entsprechend eingerichtet, durch Demodulation des Funk-Übertragungssignals wieder eine Abfolge von Bits zu erzeugen, welche dann Daten auf der physikalischen Schicht des zweiten Protokolls darstellt. In Abwandlung zum Wandler 112 des Senders 110, besitzt der Wandler 122 eingangsseitig ein dem angewandten zweiten Protokoll entsprechendes originär vorgesehenes Medium und ist dazu eingerichtet, die Abfolge von Bits wieder in ein Datensignal entsprechend dem ersten, auf dem kabelgebundenen Datennetz eingesetzten Netzwerkprotokoll umzuwandeln. Der Ausgang 121 ist dann für die Ausgabe des Datensignals auf dem kabelgebundenen Datennetz zuständig.

Es sei darauf hingewiesen, dass ein Medienkonverter im Rahmen der Erfindung grundsätzlich auch zur bidirektionalen Übertragung von Daten eines kabelgebundenen Datennetzes mit wenigstens einem kombinierten Sende- und Empfangsgerät, welches einen Sender und einen Empfänger, wie vorstehend beschrieben, umfasst.

Es sei ferner darauf hingewiesen, dass der Wandler 112 und/oder der Wandler 122 zur vorstehend beschrieben Wandlung eines Feldbus-Datensignals, insbesondere eines Ethernet-Datensignals in eine Abfolge von Bits entsprechend einem Fibre-Channel-Standard oder umgekehrt, mit einem PHY, welcher die andere Schnittstelle bereits hat, oder aber auch schaltungstechnisch mit zwei PHYs realisiert werden kann, d.h. im Falle einer Wandlung eines Ethernet-Datensignals in eine Abfolge von Bits entsprechend einem Fibre-Channel-Standard oder umgekehrt mit einem Ethernet-PHY, der bereits eine zusätzliche Fiberoptik Schnittstelle aufweist, oder aber mit zwei entsprechend benötigten, schaltungstechnisch miteinander verbunden PHYs.

Unter Berücksichtigung vorstehender, insbesondere auch in Bezug auf Fig. 1 erfolgter Beschreibung, sind der Modulator 113, die Antennen 114 und 124 sowie der Demodulator 123 zweckmäßig derart ausgebildet, dass das Funk-Übertragungssignal im EHF-Frequenzbereich (Extremely High Frequency) oder darüber liegt und/oder in einem ISM-Band liegt, insbesondere in einem ISM-Band im GHz-Bereich, vorzugsweise im Frequenzbereich von 57 bis 66GHz. Auch sind die vorerwähnten Einrichtungen zweckmäßig derart eingerichtet, dass der vorbestimmte Frequenzbereich einstellbar ist.

Gleichermaßen unter Berücksichtigung vorstehender, insbesondere auch in Bezug auf Fig. 1 erfolgter Beschreibung ist der Wandler 112 und/oder der Wandler 122 zweckmäßig ferner eingerichtet, einerseits bei der Umwandlung von Bits eine Codierung, insbesondere eine 4B5B Codierung, basierend auf der jeweils an der ausgangsseitigen Schnittstelle des Wandlers anliegenden physikalischen Schicht vorzunehmen, und/oder andererseits, die Umwandlung entsprechend bevorzugt kontinuierlich und unabhängig von Frames oder Paketen durchzuführen.

Unter Berücksichtigung vorstehender, insbesondere auch in Bezug auf Fig. 1 erfolgter Beschreibung, ist der zur Umwandlung des aus dem kabelgebundenen Datennetz empfangenen Datensignals in die Abfolge von Bits ausgebildete Wandler ferner bevorzugt eingerichtet, zum Einbetten von Synchronisierungsinformation in die Abfolge von Bits.

## Patentansprüche

1. Sender (110) für einen Medienkonverter zur Übertragung von Daten über unterschiedliche Medien, umfassend
- einen Eingang (111) für den Empfang eines Datensignals über ein erstes, als kabelgebundene Datennetz ausgebildetes Medium entsprechend einem ersten, auf dem ersten kabelgebundenen Datennetz eingesetzten Netzwerkprotokoll;
- einen Wandler (112), der dazu eingerichtet ist, das empfangene Datensignal in eine Abfolge von Bits umzuwandeln, wobei die Abfolge von Bits zu übertragende Daten auf der physikalischen Schicht eines zweiten Protokolls darstellt, welches auf einem zweiten, ausgangsseitig am Wandler anliegenden Medium basiert;
- einen Modulator (113), der dazu eingerichtet ist, ein Funk-Übertragungssignal in einem vorbestimmten Frequenzband mit der von dem Wandler gelieferten Abfolge von Bits zu modulieren;
und
- eine Antenne (114) zur Abstrahlung des Funk-Übertragungssignals,
dadurch charakterisiert, dass
der Wandler (112)
- eingerichtet ist, zum Durchführen der Umwandlung kontinuierlich und unabhängig von Frames oder Paketen
und
- ferner eingerichtet ist, zum Einbetten von Synchronisierungsinformation in die Abfolge von Bits.

2. Empfänger (120) für einen Medienkonverter zur Übertragung von Daten über unterschiedliche Medien mit einem ersten, als kabelgebundenes Datennetz ausgebildeten Medium und einem hierfür eingesetzten Netzwerkprotokoll, umfassend
- eine Antenne (124) zum Empfang eines Funk-Übertragungssignals in einem vorbestimmten Frequenzband, insbesondere von der Antenne (114) eines Senders 110) nach Anspruch 1;
- einen Demodulator (123) und einen, dem Demodulator Übertragungstechnisch nachfolgenden Wandler (122),
wobei der Demodulator (123) dazu eingerichtet ist, durch Demodulation des Funk-Übertragungssignals eine Abfolge von Bits zu erzeugen, welche Daten auf der physikalischen Schicht eines zweiten Protokolls darstellt, welches auf einem zweiten, eingangsseitig am Wandler anliegenden Medium basiert und der Wandler (122), dazu eingerichtet ist, die Abfolge von Bits in ein Datensignal entsprechend dem ersten, auf dem kabelgebundenen Datennetz eingesetzten Netzwerkprotokoll umzuwandeln; und
- einen Ausgang (121) für die Ausgabe des Datensignals auf dem kabelgebundenen Datennetz
dadurch charakterisiert, dass
der Wandler (122)
- eingerichtet ist, eine Abfolge von Bits mit darin eingebetteter Synchronisierungsinformation umzuwandeln sowie zur Durchführung der Umwandlung kontinuierlich und unabhängig von Frames oder Paketen.

3. Medienkonverter zur Übertragung von Daten eines kabelgebundenen Datennetzes über unterschiedliche Medien, umfassend einen Sender nach Anspruch 1 und einen Empfänger mit
- einer Antenne (124) zum Empfang des Funk-Übertragungssignals in dem vorbestimmten Frequenzband;
- einem Demodulator (123) und einem dem Demodulator Übertragungstechnisch nachfolgenden Wandler (122),
wobei der Demodulator (123) dazu eingerichtet ist, durch Demodulation des Funk-Übertragungssignals eine Abfolge von Bits zu erzeugen, welche Daten auf der physikalischen Schicht des zweiten Protokolls darstellt, welches auf dem zweiten, eingangsseitig am Wandler anliegenden Medium basiert und der Wandler (122), dazu eingerichtet ist, die Abfolge von Bits in ein Datensignal entsprechend dem ersten, auf dem kabelgebundenen Datennetz eingesetzten Netzwerkprotokoll umzuwandeln; und
- einem Ausgang (121) für die Ausgabe des Datensignals auf dem kabelgebundenen Datennetz.

4. Medienkonverter zur bidirektionalen Übertragung von Daten eines kabelgebundenen Datennetzes mit einem kombinierten Sende- und Empfangsgerät, umfassend einen Sender nach Anspruch 1 und einen Empfänger mit
- einer Antenne (124) zum Empfang des Funk-Übertragungssignals in dem vorbestimmten Frequenzband;
- einem Demodulator (123) und einem dem Demodulator Übertragungstechnisch nachfolgenden Wandler (122),
wobei der Demodulator (123) dazu eingerichtet ist, durch Demodulation des Funk-Übertragungssignals eine Abfolge von Bits zu erzeugen, welche Daten auf der physikalischen Schicht des zweiten Protokolls darstellt, welches auf dem zweiten, eingangsseitig am Wandler anliegenden Medium basiert und der Wandler (122), dazu eingerichtet ist, die Abfolge von Bits in ein Datensignal entsprechend dem ersten, auf dem kabelgebundenen Datennetz eingesetzten Netzwerkprotokoll umzuwandeln; und
- einem Ausgang (121) für die Ausgabe des Datensignals auf dem kabelgebundenen Datennetz.

5. Medienkonverter nach Anspruch 3 oder 4, wobei das kabelgebundene Datennetz auf einem Ethernet-Standard, vorzugsweise auf 100BASE-T oder 1000BASE-T, basiert und/oder wobei das zweite Protokoll einem Fibre-Channel-Standard, z.B. 100BASE-FX oder 1000BASE-FX, entspricht.

6. Medienkonverter nach einem der Ansprüche 3 bis 5, wobei das Funk-Übertragungssignal in einem ISM-Band liegt, insbesondere in einem ISM-Band im GHz-Bereich, vorzugsweise im Frequenzbereich von 57 bis 66GHz.

7. Medienkonverter nach einem der Ansprüche 3 bis 6, wobei das Funk-Übertragungssignal im EHF-Frequenzbereich (Extremely High Frequency) oder darüber liegt.

8. Medienkonverter nach einem der Ansprüche 3 bis 6, wobei der Wandler wenigstens ein Ethernet PHY mit Fiberoptik Schnittstelle ist.

9. Medienkonverter nach einem der Ansprüche 3 bis 8, wobei der Wandler bei der Umwandlung von Bits eine Codierung, insbesondere eine 4B5B Codierung, basierend auf der jeweils an der ausgangsseitigen Schnittstelle des Wandlers anliegenden physikalischen Schicht vornimmt.

10. Medienkonverter nach einem der Ansprüche 3 bis 9, wobei der Wandler des Empfängers eingerichtet ist, zum Durchführen der Umwandlung kontinuierlich und unabhängig von Frames oder Paketen.

11. Verfahren zur Übertragung von Daten eines kabelgebundenen Datennetzes über unterschiedliche Medien, mit folgenden Schritten
- Empfangen (11) eines Datensignals (11a) über ein erstes, als kabelgebundenes Datennetz ausgebildetes Medium entsprechend einem ersten, auf dem kabelgebundenen Datennetz eingesetzten Netzwerkprotokoll;
- Umwandeln (12) des empfangenen Datensignals in eine Abfolge von Bits (12a), wobei die Abfolge von Bits zu übertragende Daten auf der physikalischen Schicht eines zweiten Protokolls darstellt, welches auf einer nach Umwandlung vorliegenden anderen Energieform basiert, wobei die Umwandlung kontinuierlich erfolgt und unabhängig von Frames oder Paketen, und wobei Synchronisierungsinformation in die Abfolge von Bits eingebettet wird;
- Modulieren (13) eines Funk-Übertragungssignals (13a) in einem vorbestimmten Frequenzband mit der Abfolge von Bits und Abstrahlen (14) des Funk-Übertragungssignals (13a);
- Empfangen (24) des Funk-Übertragungssignals (13a) in dem vorbestimmten Frequenzband;
- Demodulieren (23) des Funk-Übertragungssignals (13a) in eine Abfolge von Bits (22a), welche Daten auf der physikalischen Schicht des zweiten Protokolls darstellt;
- Umwandeln (22) der Abfolge von Bits (22a) in ein Datensignal (21a) entsprechend dem ersten, auf dem kabelgebundenen Datennetz eingesetzten Netzwerkprotokoll und Ausgeben (21) des Datensignals (21a) über das kabelgebundene Datennetz.

## Claims

1. Transmitter (110) for a media converter for transmitting data via different media, comprising.
- an input (111) for receiving a data signal via a first medium formed as a wired data network in accordance with a first network protocol used on the first wired data network;
- a converter (112) that is set up to convert the received data signal into a sequence of bits, the sequence of bits representing data to be transmitted on the physical layer of a second protocol, which is based on a second medium present at the output side of the converter;
- a modulator (113) that is set up to modulate a wireless transmission signal in a predetermined frequency band using the sequence of bits supplied by the converter;
and
an antenna (114) for emitting the wireless transmission signal **characterized in that**
the converter (112)
- is set up to perform the conversion continuously and independently of frames or packets
and
- further set up to embed synchronization information in the sequence of bits.

2. Receiver (120) for a media converter for transmitting data via different media, comprising a first medium formed as a wired data network and a network protocol used for this, comprising
- an antenna (124) for receiving a wireless transmission signal in a predetermined frequency band; especially from the antenna (114) of a transmitter (110) according to claim 1
- a demodulator (123) and a converter (122) following the demodulator in terms of transmission,
wherein the demodulator (123) is set up to generate by demodulating the wireless transmission signal a sequence of bits representing data on the physical layer of a second protocol, which is based on a second medium present at the input side of the converter, and wherein the converter (122) is set up, to convert the sequence of bits into a data signal in accordance with the first network protocol used on the first wired data network;
and
- an output (121) to output the data signal on the wired data network,
**characterized in that**
- the converter (122) is set up to convert a sequence of bits having synchronization information embedded therein and to perform the conversion continuously and independently of frames or packets.

3. Media converter for transmitting data of a wired data network over different media, comprising a transmitter according to claim 1 and a receiver having
- an antenna (124) for receiving the wireless transmission signal in the predetermined frequency band;
- a demodulator (123) and a converter (122) following the demodulator in terms of transmission,
wherein the demodulator (123) is set up to generate by demodulating the wireless transmission signal a sequence of bits representing data on the physical layer of the second protocol, which is based on the second medium present at the input side of the converter, and the converter (122) is set up to convert the sequence of bits into a data signal corresponding to the first network protocol used on the wired data network; and
- an output (121) for the output of the data signal on the wired data network.

4. Media converter for bidirectional transmission of data of a wired data network with a combined transmitter and receiver device, comprising a transmitter according to claim 1 and a receiver with
- an antenna (124) for receiving the wireless transmission signal in the predetermined frequency band;
- a demodulator (123) and a converter (122) following the demodulator in terms of transmission;
- wherein the demodulator (123) is set up to generate by demodulating the wireless transmission signal a sequence of bits, which represents data at the physical layer of the second protocol, which is based on the second medium present at the input side of the converter, and the converter (122) is set up to convert the sequence of bits into a data signal corresponding to the first network protocol used on the wired data network; and
- an output (121) for the output of the data signal on the wired data network.

5. The media converter according to claim 3 or 4, wherein the wired data network is based on an Ethernet Standard, preferably on 100BASE-T or 1000BASE-T, and/or wherein the second protocol corresponds to a fiber channel Standard, for example 100BASE-FX or 1000BASE-FX.

6. The media converter according to claim 3 to 5, wherein the wireless transmission signal is in an ISM band, in particular in an ISM band in the GHz range, preferably in the frequency range of 57 to 66 GHz.

7. The media converter according to claim 3 to 6, wherein the wireless transmission signal is in the EHF (extremely high-frequency) range or above.

8. The media converter according to claim 3 to 6, wherein the converter is at least an Ethernet PHY comprising a fiber optic interface.

9. The media converter according to claim 3 to 8, wherein the converter undertakes coding during the conversion of bits, in particular 4B5B coding, on the basis of the physical layer present at the output-side interface of the converter in each case.

10. The media converter according to claim 3 to 8, wherein the converter of the receiver is set up to carry out the conversion continuously and independently of frames or packets.

11. A method for transmitting data of a wired data network via different media, comprising the following Steps
- receiving (11) a data signal (11a) via a first medium formed as a wired data network in accordance with a first network protocol used on the wired data network;
- converting (12) the received data signal into a sequence of bits (12a), wherein the sequence of bits represents data to be transmitted on the physical layer of a second protocol, which is based on a different form of energy present after conversion, wherein the conversion is continuous and independent of frames or packets, and wherein synchronization information is embedded in the sequence of bits;
- modulating (13) a wireless transmission signal (13a) in a predetermined frequency band using the sequence of bits and emitting (14) the wireless transmission signal (13a);
- receiving (24) the wireless transmission signal (13a) in the predetermined frequency band;
- demodulating (23) the radio transmission signal (13a) into a sequence of bits (22a), which represents data on the physical layer of the second protocol;
- converting (22) the sequence of bits (22a) into a data signal (21a) in accordance with the first network protocol used on the wired data network and outputting (21) the data signal (21a) via the wired data network.

## Revendications

1. Émetteur (110) pour un convertisseur de médias pour la transmission de données par l'intermédiaire de différents médias, comprenant
- une entrée (111) pour la réception d'un signal de données par l'intermédiaire d'un premier média conçu comme un réseau de données filaire, selon un premier protocole de réseau utilisé sur le premier réseau de données filaire ;
- un convertisseur (112) qui est conçu pour convertir le signal de données reçu en une séquence de bits, où la séquence de bits représente des données à transmettre sur la couche physique d'un deuxième protocole, qui est basé sur un deuxième média se trouvant côté sortie au niveau du convertisseur ;
- un modulateur (113), qui est conçu pour moduler un signal de transmission radio, dans une bande de fréquence prédéterminée, avec la séquence de bits délivrée par le convertisseur ;
et
- une antenne (114) pour l'émission du signal de transmission radio,
**caractérisé en ce que** le convertisseur (112)
- est conçu pour réaliser la conversion de manière continue et indépendamment de trames ou de paquets
et
- est en outre conçu pour l'intégration d'informations de synchronisation dans la séquence de bits.

2. Récepteur (120) pour un convertisseur de médias pour la transmission de données par l'intermédiaire de différents médias, avec un premier média conçu comme un réseau de données filaire et un protocole de réseau utilisé pour celui-ci, comprenant
- une antenne (124) pour la réception d'un signal de transmission radio dans une bande de fréquence prédéterminée, en particulier provenant de l'antenne (114) d'un émetteur (110) selon la revendication 1 ;
- un démodulateur (123) et un convertisseur (122) disposé en aval du démodulateur en termes de transmission, où le démodulateur (123) est conçu pour générer, grâce à la démodulation du signal de transmission radio, une séquence de bits qui représente des données sur la couche physique d'un deuxième protocole, qui est basé sur un deuxième média se trouvant côté entrée au niveau du convertisseur et le convertisseur (122) est conçu pour convertir la séquence de bits en un signal de données selon le premier protocole de réseau utilisé sur le réseau de données filaire ; et
- une sortie (121) pour l'émission du signal de données sur le réseau de données filaire
**caractérisé en ce que** le convertisseur (122)
- est conçu pour convertir une séquence de bits avec des informations de synchronisation intégrées ainsi que pour la réalisation de la conversion de manière continue et indépendamment de trames ou de paquets.

3. Convertisseur de médias pour la transmission de données d'un réseau de données filaire par l'intermédiaire de différents médias, comprend un émetteur selon la revendication 1 et un récepteur avec
- une antenne (124) pour la réception du signal de transmission radio dans la bande de fréquence prédéterminée ;
- un démodulateur (123) et un convertisseur (122) disposé en aval du démodulateur en termes de transmission, où le démodulateur (123) est conçu pour générer, grâce à la démodulation du signal de transmission radio, une séquence de bits qui représente des données sur la couche physique du deuxième protocole, qui est basé sur le deuxième média se trouvant côté entrée au niveau du convertisseur et le convertisseur (122) est conçu pour convertir la séquence de bits en un signal de données selon le premier protocole de réseau utilisé sur le réseau de données filaire ; et
- une sortie (121) pour l'émission du signal de données sur le réseau de données filaire.

4. Convertisseur de médias pour la transmission bidirectionnelle de données d'un réseau de données filaire avec un appareil combiné d'émission-réception, comprenant un émetteur selon la revendication 1 et un récepteur avec
- une antenne (124) pour la réception du signal de transmission radio dans la bande de fréquence prédéterminée ;
- un démodulateur (123) et un convertisseur (122) disposé en aval du démodulateur en termes de transmission, où le démodulateur (123) est conçu pour générer, grâce à la démodulation du signal de transmission radio, une séquence de bits qui représente des données sur la couche physique du deuxième protocole, qui est basé sur le deuxième média se trouvant côté entrée au niveau du convertisseur et le convertisseur (122) est conçu pour convertir la séquence de bits en un signal de données selon le premier protocole de réseau utilisé sur le réseau de données filaire ; et
- une sortie (121) pour l'émission du signal de données sur le réseau de données filaire.

5. Convertisseur de médias selon la revendication 3 ou 4, où le réseau de données filaire est basé sur une norme Ethernet, de préférence sur 10OBASE-T ou 1000BASE-T et/ou où le deuxième protocole correspond à une norme Fibre-Channel, par exemple 100BASE-FX ou 1000BASE-FX.

6. Convertisseur de médias selon l'une des revendications 3 à 5, où le signal de transmission radio se trouve dans une bande ISM, en particulier dans une bande ISM dans le domaine du GHz, de préférence dans le domaine de fréquences de 57 à 66 GHz.

7. Convertisseur de médias selon l'une des revendications 3 à 6, où le signal de transmission radio se trouve dans le domaine de fréquences EHF (Extremely High Frequency) ou au-dessus.

8. Convertisseur de médias selon l'une des revendications 3 à 6, où le convertisseur est au moins un PHY Ethernet avec interface à fibre optique.

9. Convertisseur de médias selon l'une des revendications 3 à 8, où le convertisseur effectue, lors de la conversion de bits, un codage, en particulier un codage 4B5B basé sur la couche physique se trouvant respectivement au niveau de l'interface côté sortie du convertisseur.

10. Convertisseur de médias selon l'une des revendications 3 à 9, où le convertisseur du récepteur est conçu pour la réalisation de la conversion de manière continue et indépendamment de trames ou de paquets.

11. Procédé de transmission de données d'un réseau de données filaire par l'intermédiaire de différents médias, avec les étapes suivantes :
- réception (11) d'un signal de données (11a) par l'intermédiaire d'un premier média conçu comme un réseau de données filaire, selon un premier protocole utilisé sur le réseau de données filaire ;
- conversion (12) du signal de données reçu en une séquence de bits (12a), où la séquence de bits représente des données à transmettre sur la couche physique d'un deuxième protocole, qui est basé sur une autre forme d'énergie existant après la conversion, où la conversion a lieu de manière continue et indépendamment de trames ou de paquets, et où des informations de synchronisation sont intégrées dans la séquence de bits ;
- modulation (13) d'un signal de transmission radio (13a) dans une bande de fréquence prédéterminée avec la séquence de bits et émission (14) du signal de transmission radio (13a) ;
- réception (24) du signal de transmission radio (13a) dans la bande de fréquence prédéterminée ;
- démodulation (23) du signal de transmission radio (13a) en une séquence de bits (22a) qui représente des données sur la couche physique du deuxième protocole ;
- conversion (22) de la séquence de bits (22a) en un signal de données (21a) selon le premier protocole de réseau utilisé sur le réseau de données filaire et émission (21) du signal de données (21a) par l'intermédiaire du réseau de données filaire.
